# EUROPEAN PATENT SPECIFICATION

(11) **EP 1 580 080 B1**
(45) Date of publication and mention of the grant of the patent: **31.01.2007**
(21) Application number: 05006657.0
(22) Date of filing: 24.03.2005
(51) Int. Cl.: B60R 21/015

(54) **Seating sensor having film switch and resistor element**
Sitzsensor mit Schalter auf Folie und Widerstandselement
Détecteur de présence pour siège comportant commutateur en film et élément de résistance

(30) Priority: 25.03.2004 JP 2004089793; 30.06.2004 JP 2004193394
(43) Date of publication of application: 28.09.2005
(73) Proprietor: DENSO CORPORATION, Kariya-city, Aichi-pref. 448-8661 (JP)
(72) Inventor: Saito, Yukihiro, Kariya-city, Aichi-pref. 448-8661 (JP); Taguchi, Masahiro, Kariya-city, Aichi-pref. 448-8661 (JP); Yamanaka, Shoichi, Kariya-city, Aichi-pref. 448-8661 (JP)
(74) Representative: Kuhnen & Wacker

(56) References cited:
- DE-A1- 19 606 527
- DE-C1- 4 237 072
- US-B1- 6 297 641
- US-B1- 6 348 663
- US-B1- 6 450 046
- PATENT ABSTRACTS OF JAPAN vol. 2000, no. 01, 31 January 2000 (2000-01-31) & JP 11 297153 A (FUJIKURA LTD), 29 October 1999 (1999-10-29)

## Description

The present invention relates to a seating sensor according to claim 1.

From US-B1-6 348 663, which shows the features of the preamble of claim 1, a seating sensor is known comprising a film that is electrically insulative, a pair of conductive wires that is low in resistance, wherein the pair of conductive wires are formed on the film, the pair of conductive wires have base end portions that are connected with a connector. Moreover, with this known seating sensor a plurality of film switches are provided that detect sitting, the plurality of film switches being formed in the pair of conductive wires to short the pair of conductive wires in response to sitting. Moreover, the known seating sensor comprises also a break-detecting resistor element that has predetermined electric resistance, the break-detecting resistor element having ends that are individually connected with the pair of conductive wires, wherein the break-detecting resistor element is located between the base end portions of the pair of conductive wires and the plurality of film switches.

Furthermore, also a seating sensor embedded in a seat of a vehicle for detecting presence or absence of an occupant is conventionally known. The seating sensor includes a resin film provided with film switches. The film switches are activated in response to sitting pressure applied by an occupant. The film switches are provided with conductive patterns that form conducting paths for supplying electric power to the film switches. Base end portions of the conductive patterns form connector terminals that are to be inserted into a vehicular side connector.

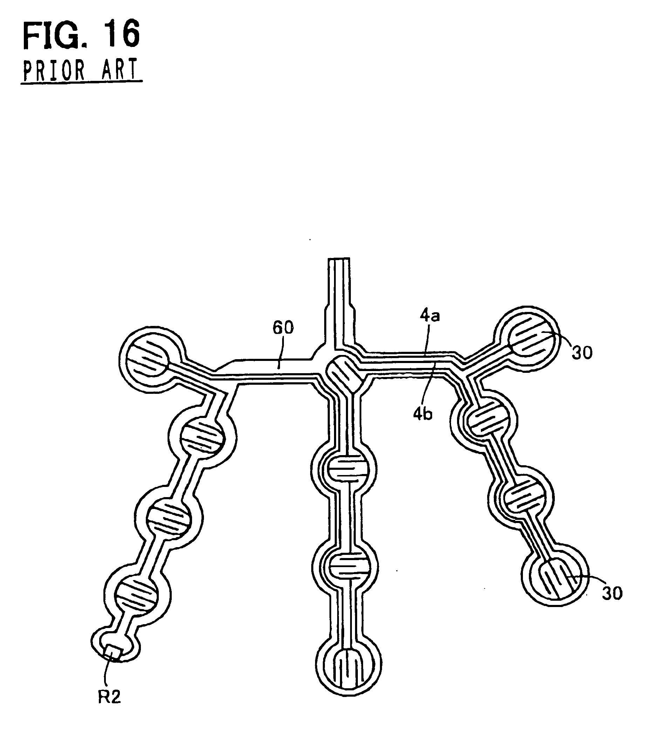

A seating sensor disclosed in JP-A-11-297153 incorporates a break-detecting resistor, so that an internal disconnection failure in the seating sensor is capable of being detected. The conventional seating sensor with a break-detecting resistor is specifically described in reference to Fig. 16.

A plus source line 4a, a minus source line 4b, a break-detecting resistor element R1, and a number of contact electrode couples 30 are formed on the top surface of a lower film. The plus source line 4a and the minus source line 4b are generally twisted and turned, so that the plus and minus source lines 4a, 4b are spaced for a predetermined distance away from each other. The plus and minus source lines 4a, 4b are substantially in parallel with each other, and are widely distributed over the seated surface. The break-detecting resistor element R2 connects an end of the plus source line 4a with an end of the minus source line 4b. The contact electrode couples 30 are fixed contacts that respectively diverge from the plus source line 4a and minus source line 4b. The plus source line 4a and minus source line 4b face each other like comb teeth in the contact electrode couples 30. The contact electrode couples 30, which are large in total number, are arranged throughout the plus source line 4a and minus source line 4b.

An upper film is arranged on the top surface of the lower film via spacers that is made of resin placed therebetween. Conductive patterns, which serve as movable contacts in the locations where the spacers are cut out, are printed on the bottom surface of the upper film. Thus, each movable contact touches a contact electrode couples 30, when a seat is occupied, so that the plus source line 4a and minus source line 4b are short-circuited, Thereby, seating can be detected. That is, when the seating sensor is viewed as an electric circuit, a number of film switches, which are constructed of the contact electrode couples 30 and movable contacts, are connected in parallel with the break-detecting resistor element R2.

As long as neither the plus source line 4a nor minus source line 4b has a broken portion, resistance between the base end portions of the plus source line 4a and minus source line 4b is identical. That is, the electric resistance of the circuit, which is viewed from the connector terminals of the seating sensor, is identical. When the seat is not occupied, the electric resistance becomes the electric resistance of the break-detecting resistor element R2.

When the seat is occupied, the film switch is closed, so that the electric resistance of the circuit becomes significantly small. Here, the wiring resistance of the plus source line 4a and minus source line 4b shall be ignored. Further, when the plus source line 4a or minus source line 4b has a broken portion, the electric resistance value viewed from the connector terminals of the seating sensor ideally reaches almost an infinitely large value. Therefore, a break in the plus source line 4a and minus source line 4b can be easily detected.

However, in the conventional seating sensor with a break-detecting resistor, the break-detecting resistor element needs to be provided away from the connector farther than all the film switches, when being viewed from the side of the connector. That is, the break-detecting resistor element needs to be provided on leading end portions of conductive wires in order to detect a break of the conductive wire, which results termination of supplying electric power to all the film switches. Accordingly, the conductive wire becomes difficult to be forked similarly to octopus legs. In addition, wires, which lead to the number of film switches arranged on the seated surface, may be elongated. Accordingly, influence of variations of wiring resistances on signal voltages becomes large depending on the positions where the film switches are arranged. That is, the resistance value of the seating sensor viewed from the side of the connector becomes small when the film switch nearest to the connector is in its on state, and the resistance value becomes large when the film switch nearest to the break-detecting resistor element is in its on state.

Besides, stress concentration may arise in connecting portions between the break-detecting resistor element and conductive wires due to repeatedly seating in the conventional seating sensor. The connecting portions are arranged on the seated surface. Accordingly, the wires may easily break at the connecting portions. Additionally, application of pressure to the break-detecting resistor element causes a change in resistance of the break-detecting resistor element, in the conventional seating sensor.

In view of the foregoing problems, it is an object of the present invention to provide a seating sensor that has a structure, in which a seating sensor performance of detecting a break can be protected from being degraded. It is another object of the present invention to provide a seating sensor that has a structure, in which a disconnection failure owing to addition of a break-detecting resistor element can be restricted.

According to the present invention the above object is solved by the features of claim 1.

Improved embodiments of the inventive seating sensor result from the sub-claims.

According to the present invention, a seating sensor includes a film, a pair of conductive wires, multiple film switches, and a break-detecting resistor element.

The film is electrically insulative. The pair of conductive wires is low in resistance. The pair of conductive wires is formed on the film. The pair of conductive wires has base end portions that are connected with a connector. The film switches detect sitting. The film switches are formed in the pair of conductive wires to short the pair of conductive wires in response to sitting. The break-detecting resistor element has predetermined electric resistance. The break-detecting resistor element is formed on the film. The break-detecting resistor element has ends that are individually connected with the pair of conductive wires. The break-detecting resistor element is located between the base end portions of the pair of conductive wires and the film switches.

The seating sensor further includes a seated-surface-arranged portion and an exterior-seated-surface-arranged portion. The seated-surface-arranged portion includes the film switches. The seated-surface-arranged portion is arranged in a seated surface of a sitting space. The exterior-seated-surface-arranged portion includes the break-detecting resistor element. The exterior-seated-surface-arranged portion is arranged in a location, which is other than the seated surface, adjacent to the seated-surface-arranged portion. The break-detecting resistor element is arranged in the exterior-seated-surface-arranged portion.

The break-detecting resistor element is arranged at a substantially central portion between an end portion of the film, which is on the side of the plurality of film switches, and the base end portions of the pair of conductive wires.

The film includes a lower-side film, an upper-side film, and a spacer film. A plus conductive wire and a minus conductive wire are formed as the pair of conductive wires on the lower-side film. The plus conductive wire has a first lower-side contact of the plurality of film switches. The minus conductive wire has a second lower-side contact of the film switches. The first upper-side contact of the film switches, a second upper-side contact of the film switches, and a conductive wire are formed on the upper-side film, The first upper-side contact faces the first lower-side contact of the plus conductive wire. The second upper-side contact faces the second lower-side contacts of the minus conductive wire. The conductive wire connects the first upper-side contact with the second upper-side contact. The spacer film is electrically insulative. The spacer film is interposed between the lower-side film and the upper-side film. The spacer film defines an opening. The first lower-side contact is capable of making contact with the first upper-side contact through the opening of the spacer film. The second lower-side contact is capable of making contact with the second upper-side contact through the opening of the spacer film.

The first lower-side contact branches from the plus conductive wire in a shape of octopus legs, and the second lower-side contact branches from the minus conductive wire in a shape of octopus legs.

Specifically, the film includes the lower-side film, the upper-side film, and the spacer film. The spacer film is electrically insulative, and is interposed between the lower-side film and the upper-side film. Each film switch includes one of the first lower-side contact and the second lower-side contact that are formed on the lower-side film. Each film switch includes one of the first upper-side contact and the second upper-side contact that are formed on the upper-side film. Each first lower-side contact faces each first upper-side contact, and each second lower-side contact faces each second upper-side contact. The pair of conductive wires includes the plus conductive wire and the minus conductive wire that are formed on the lower-side film. The plus conductive wire is connected with each first lower-side contact, and the minus conductive wire is connected with each second lower-side contacts. The upper-side film includes the conductive wire that connects the first upper-side contact with the second upper-side contact. The spacer film defines an opening. Each first lower-side contact is capable of making contact with each first upper-side contact through the opening of the spacer film. Each second lower-side contact is capable of making contact with each second upper-side contact through the opening of the spacer film.

Alternatively, the plus conductive wire has first lower-side contacts of the film switches. The minus conductive wire has second lower-side contacts of the film switches. Each first lower-side contact and each second lower-side contact are adjacent to each other. Upper-side contacts of the film switches are formed on the upper-side film. Each upper-side contact faces each first lower-side contact of the plus conductive wire and each second lower-side contact of the minus conductive wire. Each first lower-side contact and each second lower-side contact are capable of making contact with each upper-side contacts through the opening of the spacer film.

Specifically, each film switch includes a first lower-side contact and a second lower-side contact that are formed on the lower-side film to be adjacent to each other. Each film switch includes an upper-side contact that is formed on the upper-side film. The upper-side contact faces both the first lower-side contact and the second lower-side contact that are adjacent to each other. The pair of conductive wires includes the plus conductive wire and the minus conductive wire that are formed on the lower-side film. The plus conductive wire is connected with each first lower-side contact, and the minus conductive wire is connected with each second lower-side contacts. The spacer film defines an opening, through which both the first lower-side contact and the second lower-side contact are capable of making contact with the upper-side contact.

The seating sensor may include a current-limiting resistor element that limits current. The resistor element is located on the side of the base end portion of the pair of conductive wires with respect to the plurality of film switches. The current-limiting resistor element is arranged on the film. The current-limiting resistor element is connected in series with at least one of the pair of conductive wires.

The current-limiting resistor element is manufactured in a printing process identical with a printing process in which the break-detecting resistor element is manufactured.

The current-limiting resistor element is connected with at least one of the pair of conductive wires on the side of the base end portion of the pair of conductive wires with respect to the break-detecting resistor element.

The film includes an octopus leg-shaped portion and a straight belt-shaped portion. The octopus leg-shaped portion includes film switches formed therein. The straight belt-shaped portion is arranged between the octopus leg-shaped portion and the connector. Each of the pair of conductive wires is formed in the octopus leg-shaped portion. The pair of conductive wires is substantially line symmetrical with respect to the straight belt-shaped portion as a central line thereof.

The above and other objects, features and advantages of the present invention will become more apparent from the following detailed description made with reference to the accompanying drawings. In the drawings:
FIG. 1 is a schematic perspective view showing a seating sensor provided to a seat according to a first embodiment of the present invention;
FIG. 2 is a schematic plan view showing the seating sensor according to the first embodiment;
FIG. 3 is a cross-sectional side view taken along the line III-III in FIG. 2 according to the first embodiment;
FIG. 4 is an exploded plan view showing a lower-side film of the seating sensor according to the first embodiment;
FIG 5 is an exploded plan view showing an upper-side film of the seating sensor according to the first embodiment;
FIG. 6 is a cross-sectional side view showing the seating sensor, when the seat is not occupied, according to the first embodiment;
FIG. 7 is a cross-sectional side view showing the seating sensor, when the seat is occupied, according to the first embodiment;
FIG. 8 is an enlarged plan view showing a main part of the seating sensor according to the first embodiment;
FIG. 9 is an equivalent circuit diagram showing the seating sensor according to the first embodiment;
FIG. 10 is an exploded plan view showing a lower-side film of a seating sensor according to the second embodiment of the present invention;
FIG. 11 is an exploded plan view showing an upper-side film of the seating sensor according to the second embodiment;
FIG 12 is an equivalent circuit diagram showing the seating sensor according to the second embodiment;
FIG. 13 is a schematic plan view showing a baking process of the seating sensor according to the second embodiment;
FIG. 14 is a block circuit diagram showing a sitting-detecting apparatus according to a third embodiment of the present invention;
FIG. 15 is a block circuit diagram showing a sitting-detecting apparatus according to a modification of the third embodiment; and
FIG. 16 is a plan view showing a seating sensor according to a prior art.

Preferred embodiments of a seating sensor of the present invention will be described below. However, the present invention is not limited to the embodiments below, and it is obvious that the technical idea of the present invention can be embodied by other known arts or a combination thereof.

### (First Embodiment)

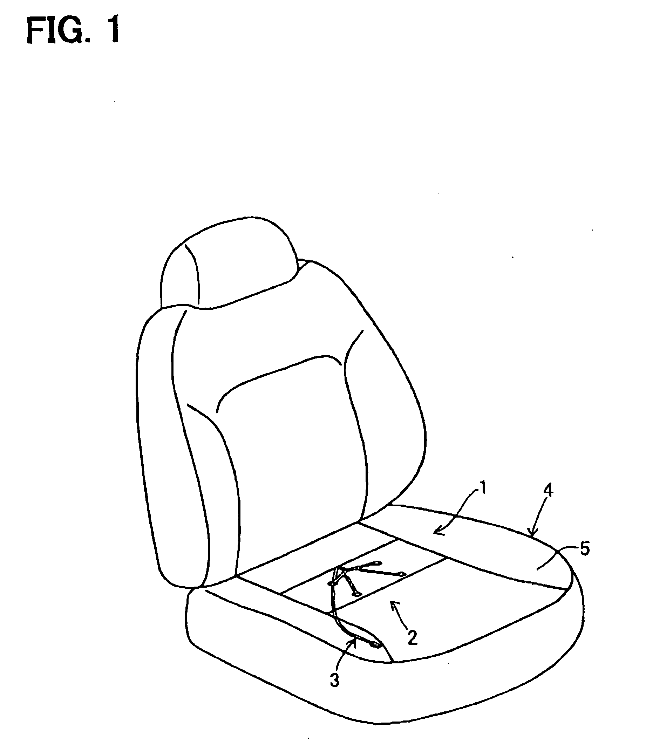

As shown in FIGS. 1 to 3, the seating sensor 1 is formed by punching a film. The seating sensor 1 includes an octopus leg-shaped portion 2 and a straight portion 3.

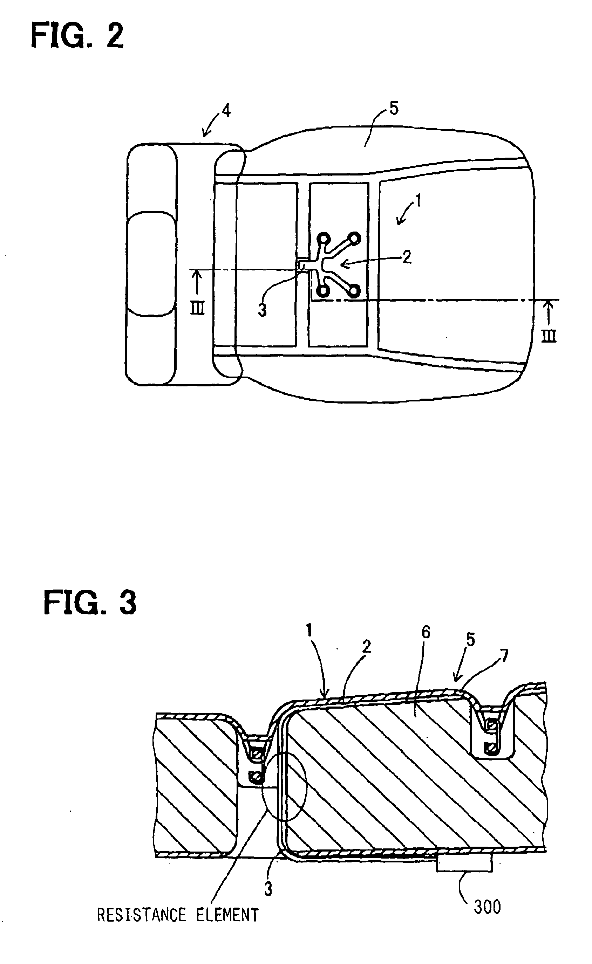

The octopus leg-shaped portion 2 is formed in a shape like a group of octopus legs. The straight portion 3 linearly extends from the octopus leg-shaped portion 2. The octopus leg-shaped portion 2 and a part of the straight portion 3, in which the straight portion 3 is connected with the octopus leg-shaped portion 2, are arranged on the top surface, i.e. seated surface of a cushion 6 of the seat 5. Thereby, the octopus leg-shaped portion 2 and the part of the straight portion 3 construct a seated-surface-arranged portion, which is arranged on the seated-surface of the seat 5. The top surface of a cushion 6 of the seat 5 is a seated portion of the sitting space 4. As shown in FIG. 3, the remaining part of the straight portion 3 extends through a gap of the cushion 6 of the seat 5 downward along a side face of the cushion 6. A seat cover 7 is made of a cloth or leather for covering the cushion 6. The seat cover 7 surrounds and covers the seating sensor 1 above the top surface of the cushion 6. The straight portion 3 of the seating sensor 1 protrudes from the bottom surface of the seat cover 7 on the bottom surface of the cushion 6. The straight portion 3 of the seating sensor 1 is attached to a connector 300 fixed on the bottom surface of the seat 5.

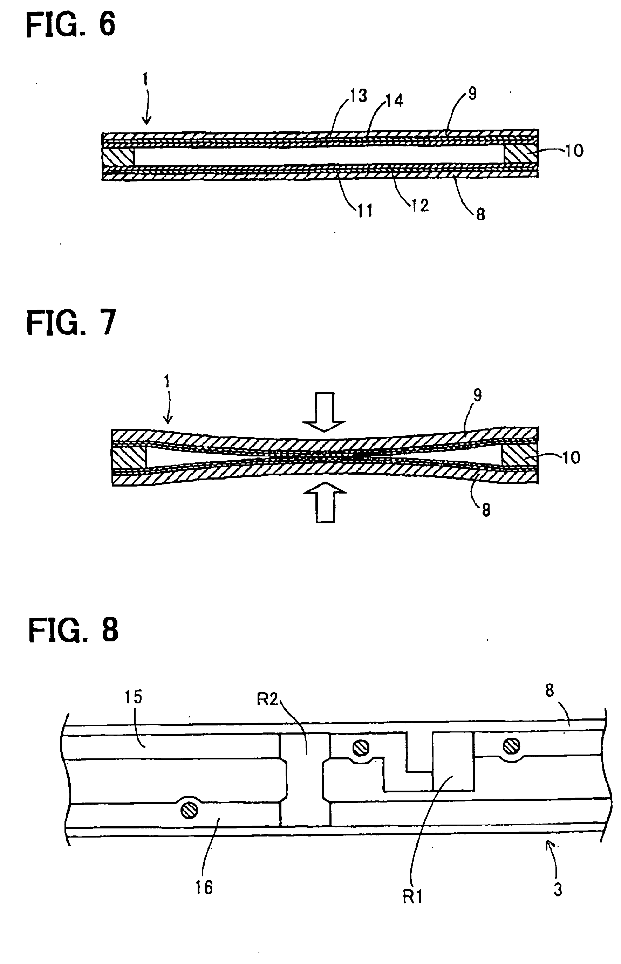

As shown in FIGS. 6 and 7, the seating sensor 1 includes a lower-side film (electrically insulative film) 8, an upper-side film (electrically insulative film) 9, a spacer film 10, conductive layers 11 and 12, and conductive layers 13 and 14. The spacer film 10 is formed of resin film, and is placed between the lower-side film and the upper-side film. The conductive layers 11 and 12 are formed on the top surface of the lower-side film 8 by printing. The conductive layers 13 and 14 are formed on the bottom surface of the upper-side film 9 by printing. The conductive layers 11 and 13 are formed of silver paste. The conductive layers 12 and 14 are formed of carbon paste.

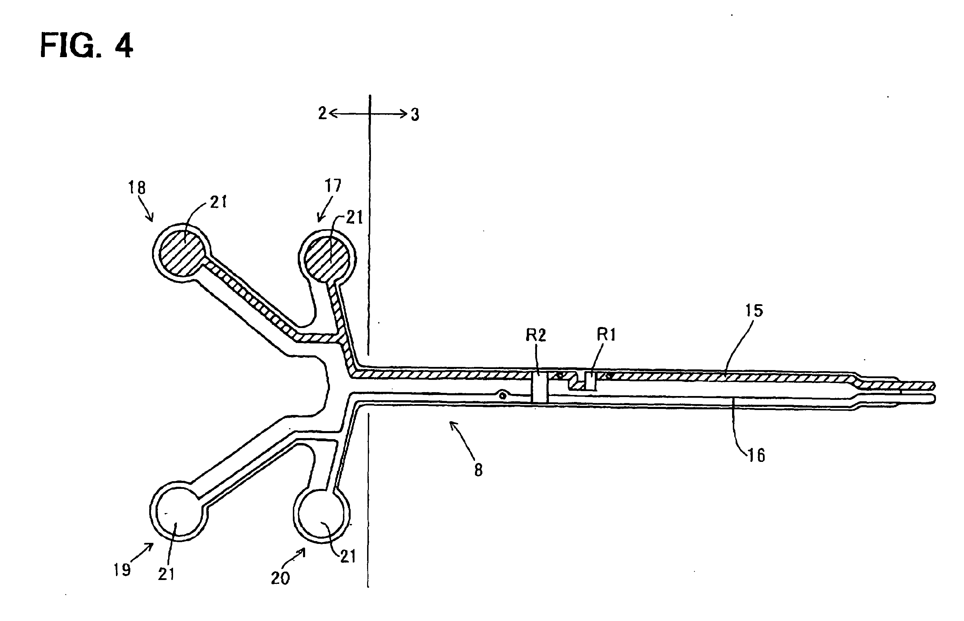

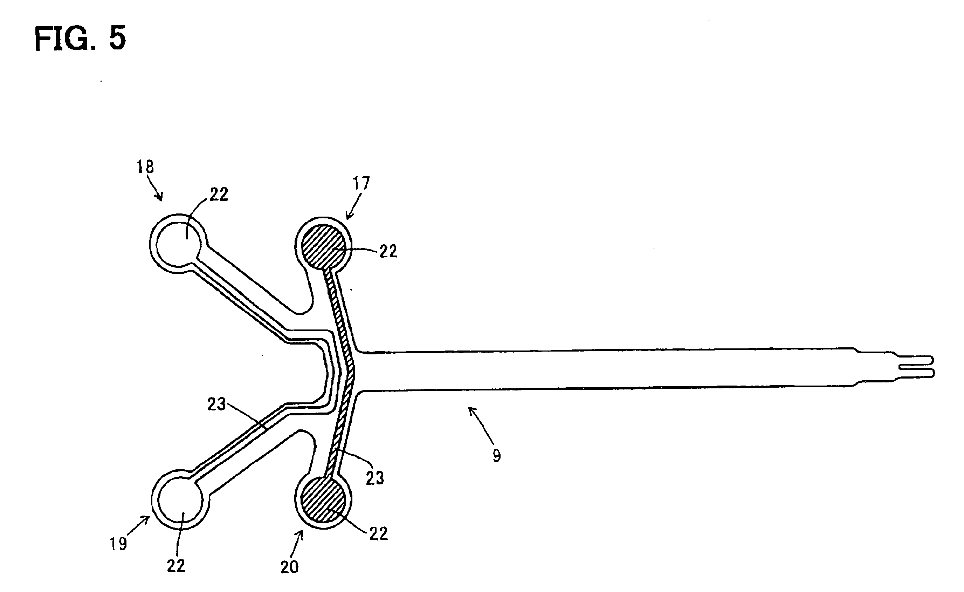

The conductive layers 11, 12 of the lower-side film 8 construct a plus conductive wire 15, a minus conductive wire 16, first and second lower-side contacts 21 of switches 17-20. As shown in FIG, 4, the first lower-side contacts 21 of the switches 17-20 are connected to the plus conductive wire 15, the second lower-side contacts 21 of the switches 17-20 are connected to the minus conductive wire 16. As shown in FIG. 5, the conductive layers 13, 14 of the upper-side film 9 construct first and second upper-side contacts 22 of the switches 17-20 and a conductive wire 23. The conductive wire 23 connects the first upper-side contacts 22 with second upper-side contacts 22. The first and second upper-side contacts 22 of the switches 17-20 are also serve as short contacts. Here, in FIGS. 4 and 5, the conductive wire is partially hatched for clarification of the illustrations.

The plus conductive wire 15 and the minus conductive wire 16 are provided in the straight portion 3 of the seating sensor 1 to be located apart from each other for a predetermined distance along the width direction of the straight portion 3. As shown in FIG. 4, the plus conductive wire 15 and the minus conductive wire 16 extend to the base end portion of the straight portion 3 in the longitudinal direction of the straight portion 3. The plus conductive wire 15 and the minus conductive wire 16 construct terminals for connection of the connector at the base end portion. That is, the plus conductive wire 15 and the minus conductive wire 16 are inserted into the connector 300, and are fixed to the base end portion of the straight portion 3.

Each of the first and second lower-side contacts 21 shown in FIG. 4 and the corresponding upper-side contacts 22 shown in FIG. 5 face each other via an opening of the spacer film 10 located therebetween as shown in FIGS. 6, 7. Each of the first and second lower-side contacts 21 are brought into contact with the corresponding upper-side contacts 22 on application of sitting pressure thereby to be electrically connected. It is obvious that the seating sensor 1 is turned on, when the film switches 17, 20 or the film switches 18, 19 turn on.

In FIG. 4, the current-limiting resistor element R1 and the break-detecting resistor element R2 are formed on the lower-side film 8 through a common process. The current-limiting resistor element R1 is interposed in the plus conductive wire 15, and is located substantially at a central portion of the straight portion 3. The break-detecting resistor element R2 is formed such that the resistor element R2 is located substantially at the central portion of the straight portion 3. The break-detecting resistor element R2 connects the plus conductive wire 15 with the minus conductive wire 16.

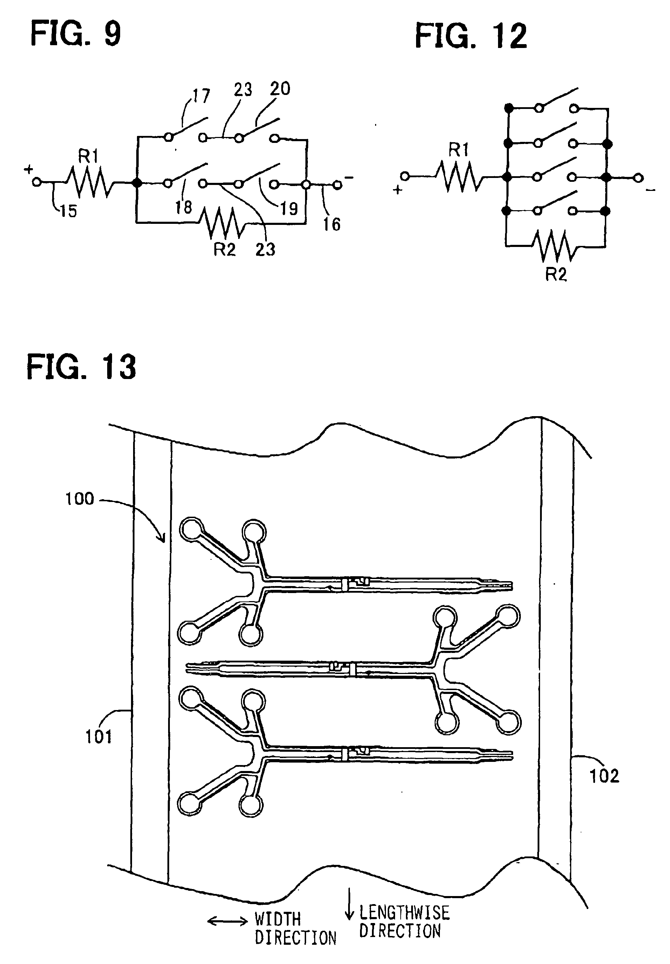

As shown in FIGS. 8 and 9, when a predetermined voltage is applied between the paired base end portions of the seating sensor 1 via a load resistance, and when the switches 17, 20 or the switches 18, 19 are turned on, voltage drop developed in the seating sensor 1 is changed, so that seating can be detected. In addition, when a break arises on the upstream side of the break-detecting resistor element R2, voltage drop in the seating sensor 1 increases, so that the break can be detected.

The manufacturing process will be described below. The manufacturing process itself may be the same as that of the conventional seating sensor with a break-detecting resistor. As shown in FIG. 6, the lower-side film 8 and the upper-side film 9 are formed of polyethylene naphthalate (PEN) films. The lower-side film 8. is printed with the paste for conductive layers 11, 12, while the upper-side film 9 is printed with the paste for conductive layers 13, 14. Subsequently, the lower-side film 8 and upper-side film 9 are baked. Subsequently, a spacer film 10 is sandwiched and glued between the lower-side film 8 and the upper-side film 9, so that an elongated composite film is formed. The elongated composite film may be cut out into a form shown in FIG 1. The upper-side film 9 is removed in the base end portions of the plus conductive wire 15 and minus conductive wire 16. The seating sensor 1 formed through the above process is glued on a seat 5, and the manufacturing process is completed.

The first and second lower-side contacts 21 of the switches 17, 18 make octopus-legs-like lines, which diverge from the plus conductive wire 15. Besides, the first and second lower-side contacts 21 of the switches 19, 20 form octopus-legs-like lines, which diverge from the minus conductive wire 16. In the first and second lower-side contacts 21 having this structure, wiring voltage drop in the plus conductive wire 15 and minus conductive wire 16 can be reduced.

Specifically, according to the conventional structure of the seating sensor shown in FIG. 16, the plus source line 4a and minus source line 4b are extended throughout the seating sensor without diverging. Therefore, wiring paths of the plus source line 4a and minus source line 4b in the conventional structure are elongated compared with the structure of the present invention, in which the plus and minus conductive wires 15, 16 diverges, shown in FIG. 4.

### (Second Embodiment)

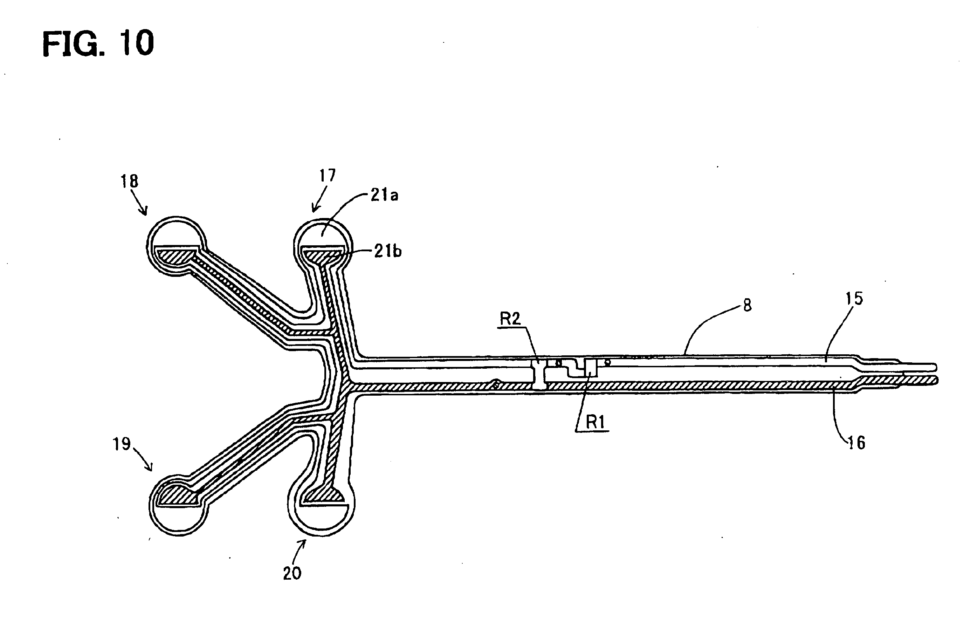

As shown in FIG. 10, a plus conductive wire 15, a minus conductive wire 16, and first and second lower-side contacts 21a, 21b of switches 17-20 are formed on the lower-side film 8. The first lower-side contacts 21a of the of switches 17-20 are connected to the plus conductive wire 15. The second lower-side contacts 21b of the of switches 17-20 are connected to the minus conductive wire 16. The second lower-side contacts 21b of the switches 17-20 form octopus-legs-like lines, which diverge from the minus conductive wire 16, so that wiring voltage drop in the minus conductive wire 16 is reduced. In the switches 17-20, the first and second lower-side contacts 21a, 21b are spaced from each other via a small gap.

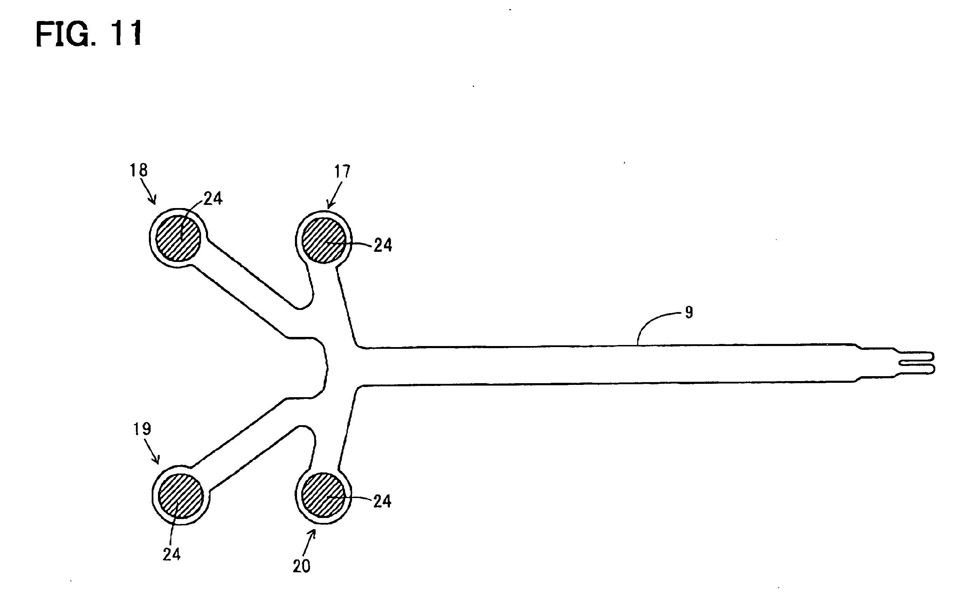

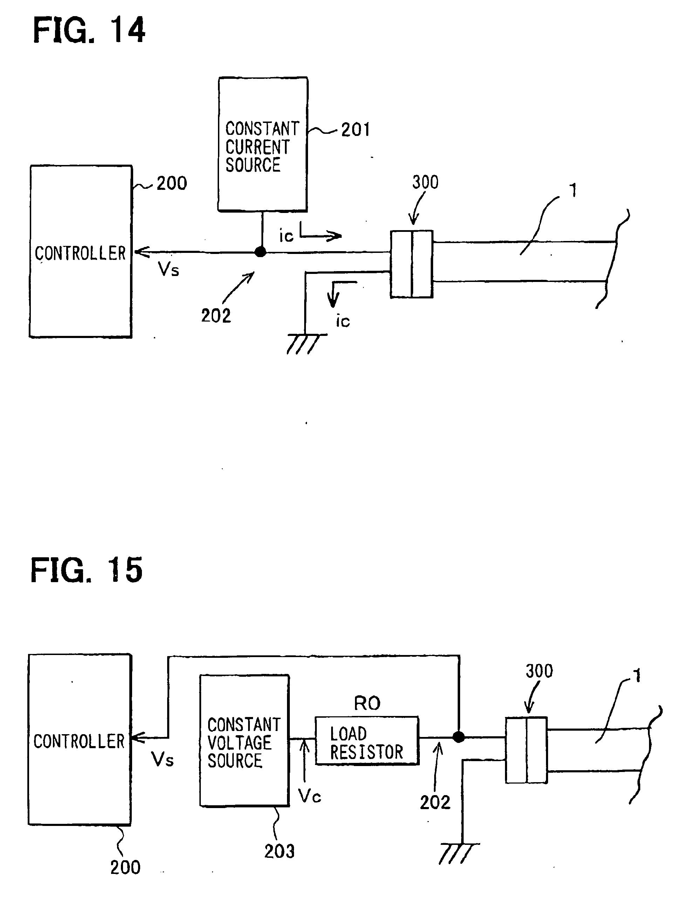

As shown in FIG. 11 and 12, short contacts (upper-side contacts) 24 are formed on the upper-side film 9. Each short contact 24 faces the corresponding first and second lower-side contacts 21a, 21b of each switch in the direction of thickness thereof. Thus, when sitting pressure is applied to the short contact 24, the short contact 24 is brought into contact with the first and second lower-side contacts 21a, 21b of one of the switches 17-20, so that the switch is turned on. Therefore, it is obvious that this embodiment can also bring substantially the same effect as that of the first embodiment.

The baking process for the seating sensor of the first or second embodiment is described in reference to FIG. 13.

An elongated film 100 with a number of seating sensors 1 printed thereon is moved into a baking furnace from its inlet to the outlet in the lengthwise direction thereof at a constant speed. Therefore, the baking furnace is formed to have a longer size in the longitudinal direction of the elongated film 100, i.e. the moving direction thereof.

The elongated film 100 is arranged within side strips 101, 102 located inside of the baking furnace. The current-limiting resistor elements R1 and the break-detecting resistor elements R2 can be located substantially in a central portion between side strips 101, 102 in the baking furnace. That is, the current-limiting resistor elements R1 and the break-detecting resistor elements R2 can be located substantially in a central portion with respect to the direction of the width of the elongated film 100. Hence, variations in temperature and flow rate of heated gas supplied into the baking furnace are reduced. Besides, variations in radiation heat, which is applied to the resistor elements R1, R2 from the wall of the baking furnace, are reduced. As a result, variations in baking of the current-limiting resistor elements R1 and break-detecting resistor elements R2 are made smaller. Thereby, variations of grain radius and the like of the resistor elements R1, R2 caused due to variations in baking temperature and baking time, can be reduced. Thus, variations of the resistance values among the resistor elements R1, R2 can be reduced.

As described above in detail, the break-detecting resistor element R2 is arranged nearer to the connector than all the film switches 17-20 on the seated surface, dissimilarly to the conventional structure, Whereby, the degree of freedom of wiring can be increased such that the wire can be branched like octopus legs, for example. Consequently, wiring resistance and variations of wiring resistance can be reduced. In addition, the break-detecting resistor element R2 need not to be arranged on the seated surface of the seat 5. Thereby, stress concentration owing to repeatedly seating in the connecting portions between the break-detecting resistor element R2 and conductive wires 15, 16 can be reduced, and the wires can be protected from breaking at the connecting portions. Besides, resistance value of the break-detecting resistor element R2 can be restricted from changing due to application of pressure to the break-detecting resistor element R2.

Besides, the break-detecting resistor element R2 is formed in a location outside the seated surface of the film, and is formed away from the sitting-detecting film switches 17-20. The sitting-detecting film switches 17-20 are located on the seated surface of the sitting space, and are formed on the film, so that the seating sensor with the break-detecting resistor element R2 can be significantly restricted from causing a disconnection failure.

Further, base end portions of the plus and minus conductive wires 15, 16 for the connector terminal can be concurrently formed on the lower-side film 8, and then the break-detecting resistor element R2 can be formed by printing overlapping the plus and minus conductive wires 15, 16. Therefore, the manufacturing process can be simplified.

### (Third Embodiment)

The embodiment relates to a sitting-detecting apparatus with the seating sensor 1 of the second embodiment having the equivalent circuit shown in FIG. 12. Especially, a function of detecting a ground fault is imparted to the sitting-detecting apparatus. Besides, the seating sensor 1 of the first embodiment, which has the equivalent circuit shown in FIG. 9, may be used instead of the seating sensor 1 shown in FIG. 12.

A controller 200 shown in FIG. 14 includes a built-in microcomputer. A constant current source 201 supplies the high potential-side conductive wire 15 (FIG. 4) of the seating sensor 1 with predetermined constant current through an on-vehicle wiring harness 202 and a connector 300. The low potential-side conductive wire 16 of the seating sensor 1 is grounded via the on-vehicle wiring harness 202.

The controller 200 incorporates an A/D converter for converting potential of the high potential-side conductive wire 15 into a digital signal. The AID converter may have a multiplexer circuit in order to enable common use of a signal from another sensor for digital conversion. In the equivalent circuit of the seating sensor shown in FIG. 12, when any one of the sitting-detecting switches is in its on state, the resistance of the seating sensor 1 is substantially equal to the resistance value r1 of the current-limiting resistor R1. When all the sitting-detecting switches are in the off states, the resistance of the seating sensor 1 is substantially equal to the sum of the resistance value r1 of the current-limiting resistor element R1 and the resistance value r2 of the break-detecting resistor element R2.

Therefore, when the constant current source 201 supplies constant current ic to the seating sensor 1, signal voltage Vs, which is equal to ic x r1 or ic x (r1 + r2), is input to the controller 200. Thereby, the controller 200 can discriminate between presence and absence of an occupied seat based on the changes of the signal voltage Vs.

The constant current source 201 may break down, and may become unable to supply the constant current ic. Alternatively, a ground fault may occur in the on-vehicle wiring harness 202, which extends from the constant current source 201 to the seating sensor 1, or in the connector 300. In this situation, the signal voltage Vs reaches a value that is much smaller than the voltage resulting from ic x r1 or ic x (r1 + r2) described above. Specifically, the value of the signal voltage Vs becomes typically almost 0 volt, and becomes much smaller than the voltage, which results from ic x r1 or ic x (r1 + r2). Therefore, an accident of a ground fault in the circuit, which is between the power supply circuit system and the seating sensor 1, can be surely detected in the above structure, regardless of presence or absence of a seated occupant.

Meanwhile, when the seating sensor 1 does not have a current-limiting resistor element R1 described above, the on-resistance value of the seating sensor 1 when the seat is occupied becomes very small, accordingly, the signal voltage Vs becomes excessively small. Thus, discriminating between seating and a ground fault becomes difficult. On the contrary, when the seating sensor 1 has only the current-limiting resistor element R1 without the break-detecting resistor element R2, the constant current source 201 cannot supply constant current when the seat is not occupied. Further, when the seating sensor 1 has only the break-detecting resistor element R2 without the current-limiting resistor element R1, it becomes difficult to detect a ground fault when the seat is occupied for the reason above-mentioned. Specifically, when the seating sensor 1 has only the break-detecting resistor element R2 without the current-limiting resistor element R1, the on-resistance value of the seating sensor 1 when the seat is occupied becomes very small.

### (Modification)

A modification is described in reference to FIG. 15. In this modification, a constant voltage source 203 is used instead of the constant current source 201 shown in FIG. 14. The constant voltage source 203 outputs constant voltage Vc, and the constant voltage Vc is applied to the high potential-side conductive wire 15 of the seating sensor 1 via a load resistor RO, an on-vehicle wiring harness 202, and a connector 300. The low potential-side conductive wire 16 of the seating sensor 1 is grounded via the on-vehicle wiring harness 202.

In this structure, the signal voltage Vs becomes r1 x Vc / (ro + r1) or (r1 + r2) x Vc / (ro + r1 + r2), where the resistance value of the load resistor RO is represented by ro. Thus, the controller 200 is capable of discriminating between presence and absence of an occupied seat based on the changes of the signal voltage Vs.

The constant voltage source 203 may break down, and the constant voltage source 203 may become unable to supply the constant voltage Vc. Alternatively, a ground fault may occur in the on-vehicle wiring harness 202, which extends from the constant voltage source 203 to the seating sensor 1, or in the connector 300. In this situation, the signal voltage Vs reaches a value much smaller than the voltage resulting from ic x r1 or ic x (r1 + r2) as described above. Specifically, the value of the signal voltage Vs is typically almost 0 volt that is much smaller than the voltage, which results from r1 x Vc / (ro + r1) or (r1 + r2) x Vc / (ro + r1 + r2). Therefore, an accident of a ground fault in the circuit, which is between the power supply circuit system and the seating sensor 1, can be surely detected in the above structure, regardless of presence or absence of a seated occupant.

According to the third embodiment and the modification thereof, a ground fault and a breakdown of the power source, which results in turning off the power source, can be discriminated regardless of presence or absence of an occupant. Moreover, such discrimination is performed using the current-limiting resistor element R1 and the break-detecting resistor element R2 of the seating sensor 1 as the resistor elements needed for the discriminating operation. Therefore, an additional resistor element need not, and increase in manufacturing cost can be restricted.

That is, the above sitting-detecting apparatus has a power source circuit and a ground fault determining circuit. The power source circuit supplies predetermined current to the seating sensor. The ground fault determining circuit detects current flowing through the seating sensor, and detects voltage drop in the seating sensor, so that the ground fault determining circuit determines a ground fault in the seating sensor and a ground fault in an electricity supply route leading to the seating sensor, based on the detected current or voltage drop.

In the above structure, the break-detecting resistor element R2 is arranged on the side of the connector 300 with respect to all the film switches 17-20 on the seated surface in the seating sensor 1. Thereby, a degree of freedom of wiring can be increased, so that the conductive wires 15, 16 leading to the film switches 17-20 can be branched in the shape of octopus legs on the seated surface, for example. Consequently, the following problem can be less prone to be posed. The problem is that the resistance value of the seating sensor 1 viewed from the side of the connector 300 becomes small when the film switch nearest to the connector 300 is in its on state, and becomes large when the film switch nearest to the break-detecting resistor element R2 is in its on state. That is, variations in the resistance value of the seating sensor 1 can be reduced. In addition, the break-detecting resistor element R2 need not to be arranged on the seated surface, so that the following two problems can be easily avoided. The first problem is that stress is concentrated owing to repeatedly seating in connecting portions between the break-detecting resistor element R2 and conductive wires 15, 16, and the wires 15, 16 may easily break at the connecting portions. The second problem is that the application of pressure to the break-detecting resistor element R2 causes a change in resistance value of the break-detecting resistor element R2.

In the above structure, the break-detecting resistor element R2 connected in parallel with the film switches 17-20 is arranged on the side of the connector 300 with respect to the film switches 17-20. In this structure, a break in the conductive wires 15, 16 cannot be detected on the side of the film switches 17-20 with respect to the break-detecting resistor element R2. In a film-type seating sensor having this structure, a seating sensor 1 includes a film 8, 9 with conductive wires 15, 16. Besides, film switches 17-20 provided on the film 8, 9 are connected with a connector 300 for external connection. The base end portions of the conductive wires 15, 16 are connected with the connector 300. With regard to the structure of the film-type seating sensor 1, the conductive wires 15, 16 and the contacts, i.e. the film switches 17-20 formed on the film 8, 9 have specific stiffness, and may be gently bent under sitting pressure. Thereby, most of breaking failures may be caused in a connecting portion between the conductive wires 15, 16 and the connector 300. Therefore, bending stress, which is applied to the film 8, 9 due to repetition of sitting and change in occupant's posture, may not be repeatedly concentrated to a particular location in the film 8, 9. Thus, in the above structure, the break-detecting resistor element R2 can be protected from causing a disconnection failure, and the seating sensor 1 with the break-detecting resistor element R2 can be produced at low cost. Here, the break-detecting resistor element R2 can be formed on the film 8, 9 by printing or the like. Alternatively, a resistor, which is formed separately from the film 8, 9, may be attached to the conductive wires 15, 16 on the film 8, 9, so that the break-detecting resistor element R2 may be formed.

In the above structure, the break-detecting resistor element R2 is formed in a location outside the seated surface of the film 8, and is formed in a location away from the sitting-detecting film switches 17-20. The sitting-detecting film switches 17-20 are located on the seated surface of the sitting space 4, and are formed on the film 8, 9. Thereby, a disconnection failure of the break-detecting resistor element R2 in the seating sensor 1 can be significantly reduced. More specific description will be presented below.

In order to examine reliability of the seating sensor 1 with a break-detecting resistor disclosed in JP-A-11-297153, a sensor including a resistor is set in a sitting space, and load is repeatedly applied to the sitting space. The conductive wires 15, 16 are formed by printing silver paste on the film, and the break-detecting resistor element R2 is formed by printing resistance paste on the film, and subsequently, the film is heated up to a specific temperature such that no trouble is posed in the film. As a result, when sitting stress is applied to the seated surface of the sitting space 4 for more than several thousands of times, a break is caused in a connecting portion between the conductive wires 15, 16 and the break-detecting resistor element R2. This can be presumed as follows. That is, the break-detecting resistor element R2 and the conductive wires 15, 16 are different in bending stiffness. Accordingly, bending stress resulting from sitting is locally concentrated in a region, in which the break-detecting resistor element R2 is connected with the conductive wires 15, 16, and a break is caused in the region. On the contrary, in the structure of the present invention, the break-detecting resistor element R2 is arranged in a portion of the film on the side of the connector 300 with respect to the seated surface, and is arranged outside the seated surface, so that stress concentration is capable of being reduced.

The break-detecting resistor element R2 is arranged at a substantially central portion between the end portion of the film 7, 8, 9, in which the film switches 17-20 are arranged, and the base end portion of the film. Here, in the manufacturing process, especially in the heating process after the paste is printed, the break-detecting resistor element R2 can be located at a central portion in the direction of the width of a tape (film), on which the seating sensor 1 is formed. Thereby, in the above arrangement, variations of the break-detecting resistor element R2 in temperature can be reduced in the heating process, so that variations in resistance value of the break-detecting resistor element R2 can be reduced.

In the first embodiment, the film includes the lower-side film 8, the upper-side film 9, and the electrically insulative spacer film 10. The plus and the minus conductive wires 15, 16 are formed on the lower-side film 8. The plus and minus conductive wires 15, 16 have the first and second lower-side contacts 21 of the film switches 17-20. The upper-side film 9 has the upper-side contacts (first and second upper-side contacts) 22 of the film switches 17-20 and the conductive wire 23. The first upper-side contacts 22 of the film switches 19, 20 face the first lower-side contact 21 of the plus conductive wire 15. The second upper-side contact 22 of the film switches 17, 18 face the lower-side contacts 21 of the minus conductive wire 16. The conductive wire 23 connects the first upper-side contact 22 with the second upper-side contact 22 formed on the upper-side film 9. The electrically insulative spacer film 10 has the opening, through which the lower-side contacts 21 are capable of making contact with the upper-side contacts 22. The spacer film 10 is interposed between the lower-side film 8 and upper-side film 9. The lower-side contacts 21 respectively branch from the plus or minus conductive wires 15, 16 in a shape of octopus legs.

With this arrangement, base end portions of the plus and minus conductive wires 15, 16 for the connector 300 can be concurrently formed on the lower-side film 8. Subsequently, the break-detecting resistor element R2 can be formed by printing overlapping the plus and minus conductive wires 15, 16. Accordingly, the manufacturing process can be simplified, Further, variations in signal voltage owing to variations in wiring resistance of the conductive wires 15, 16 can be reduced, because one or both of the paired conductive wires 15, 16 can be wired in branching lines i.e. in the shape of octopus legs.

In the second embodiment, the film is constructed of the lower-side film 8, the upper-side film 9, and the electrically insulative spacer film 10. The lower-side film 8 has the plus conductive wire 15 and the minus conductive wire 16 formed on the lower-side film 8. Each of the plus and minus conductive wires 15, 16 has the lower-side contacts 21a, 21b for the film switches 17-20. The upper-side film 9 has the short contacts, (upper-side contacts) 24 of the film switches 17-20 formed on the upper-side film 9. Each upper-side contact 24 faces both the first lower-side contact 21a of the plus conductive wire 15 and the second lower-side contact 21b of the minus conductive wire 16. The first and second lower-side contacts 21a, 21b are adjacent to each other. The electrically insulative spacer film 10 has an opening, through which the lower-side contacts 21a, 21b are capable of making contact with the upper-side contacts 24. The spacer film 10 is interposed between the lower-side film 8 and upper-side film 9. The lower-side contacts 21a, 21b respectively branch from one of the plus and minus conductive wires 15, 16 in a shape of octopus legs.

With this arrangement, base end portions of the plus and minus conductive wires 15, 16 for the connector 300 can be concurrently formed on the lower-side film 8. Subsequently, the break-detecting resistor element R2 can be formed by printing overlapping the plus and minus conductive wires 15, 16. Accordingly, the manufacturing process can be simplified. Further, variations in signal voltage owing to variations in wiring resistance of the conductive wires 15, 16 can be reduced, because one conductive wires 15, 16, especially the inside conductive wire 16 surrounded by the other conductive wire 15 in FIG. 10 can be wired in branching lines i.e. in the shape of octopus legs.

In the above structure, the current-limiting resistor element R1 limits current. The current-limiting resistor element R1 is located nearer to the base end portion of the pair of conductive wires 15, 16 than the film switches 17-20. The current-limiting resistor element R1 is arranged on the film 8, and is connected in series with at least one of the pair of conductive wires 15, 16.

That is, the seating sensor 1 of the present invention is also characterized by the current-limiting resistor element R1 formed on the film in a conventionally-known seating sensor 1. In the above structure, current flowing through the seating sensor 1 can be significantly reduced, so that electric power consumption can be cut down.

The break-detecting resistor element R2 has a predetermined electric resistance value r2. The break-detecting resistor element R2 is provided on the film with both ends of the break-detecting resistor element R2. Both the ends of the break-detecting resistor element R2 are individually connected with the pair of conductive wires 15, 16. Electric power consumption of the seating sensor 1 with a break-detecting resistor can be cut down using the break-detecting resistor element R2.

The current-limiting resistor element R1 is manufactured by the same paste-printing process as a paste-printing process for the break-detecting resistor element R2. Thereby, the number of steps of the manufacturing process can be restricted from being increased.

The current-limiting resistor element R1 is connected with the conductive wires 15, 16 nearer to the base end portion of the pair of conductive wires 15, 16 than the break-detecting resistor element R2. Thereby, current flowing through the break-detecting resistor element R2 can be limited by the resistance value of the current-limiting resistor element R1, so that the break-detecting resistor element R2 need not to have a large resistance value. Thus, the break-detecting resistor element R2 can be easily manufactured.

The film 7, 8, 9 includes the octopus leg-shaped portion 2 and the straight belt-shaped portion 3. The octopus leg-shaped portion 2 has film switches 17-20 formed therein. The straight belt-shaped portion 3 is arranged between the octopus leg-shaped portions 2 and the connector 300. Each of the conductive wires 15, 16 is formed in the octopus leg-shaped portion 2. The conductive wires 15, 16 are line symmetrical with respect to the straight belt-shaped portion 3 as a central line thereof. With this arrangement, the length of the conductive wires 15, 16 can be reduced, and therefore the wiring loss thereof can be reduced.

The physical relationship between the upper side and the lower side of the film switch can be changed as appropriate.

The above embodiments can be combined as appropriate.

The invention is defined by the appended claims only.

## Claims

1. A seating sensor **characterized by** comprising:
a film (8, 9, 10) that is electrically insulative;
a pair of conductive wires (15, 16) that is low in resistance, the pair of conductive wires (15, 16) formed on the film (8), the pair of conductive wires (15, 16) having base end portions that are connected with a connector (300);
a plurality of film switches (17-20) that detect sitting, the plurality of film switches (17-20) being formed in the pair of conductive wires (15, 16) to short the pair of conductive wires (15, 16) in response to sitting; and
a break-detecting resistor element (R2) that has predetermined electric resistance, the break-detecting resistor element (R2) having ends that are individually connected with the pair of conductive wires (15, 16),
wherein the break-detecting resistor element (R2) is located between the base end portions of the pair of conductive wires (15, 16) and the plurality of film switches (17-20);
**characterized in that**
the break-detecting resistor element (R2) is formed on the film (8);
a seated-surface-arranged portion is provided that includes the plurality of film switches (17-20), the seated-surface-arranged portion arranged in a seated surface of a sitting space (4); and
an exterior-seated-surface-arranged portion is provided that includes the break-detecting resistor element (R2), the exterior-seated-surface-arranged portion being arranged in a location, which is other than the seated surface, adjacent to the seated-surface-arranged portion,
wherein the break-detecting resistor element (R2) is arranged in the exterior-seated-surface-arranged portion.

2. The seating sensor according to claim 1, wherein the break-detecting resistor element (R2) is arranged at a substantially central portion between an end portion of the film (8), which is on a side of the plurality of film switches (17-20), and the base end portions of the pair of conductive wires (15, 16).

3. The seating sensor according to claim 1 or 2, wherein the film (8, 9, 10) includes:
a lower-side film (8) on which a plus conductive wire (15) and a minus conductive wire (16) are formed as the pair of conductive wires (15, 16), the plus conductive wire (15) having a first lower-side contact (21) of the plurality of film switches (17-20), the minus conductive wire (16) having a second lower-side contact (21) of the plurality of film switches (17-20);
an upper-side film (9) on which a first upper-side contact (22) of the plurality of film switches (17-20), a second upper-side contact (22) of the plurality of film switches (17-20), and a conductive wire (23) are formed,
wherein the first upper-side contact (22) faces the first lower-side contact (21) of the plus conductive wire (15),
wherein the second upper-side contact (22) faces the second lower-side contact (21) of the minus conductive wire (16),
wherein the conductive wire (23) connects the first upper-side contact (22) with the second upper-side contact (22); and
a spacer film (10) that is electrically insulative, the spacer film (10) being interposed between the lower-side film (8) and the upper-side film (9), the spacer film (10) defining an opening,
wherein the first lower-side contact (21) is capable of making contact with the first upper-side contact (22) through the opening of the spacer film (10), and the second lower-side contact (21) is capable of making contact with the second upper-side contact (22) through the opening of the spacer film (10),
wherein the first lower-side contact (21) branches from the plus conductive wire (15) in a shape of octopus legs, and the second lower-side contact (21) branches from the minus conductive wire (16) in a shape of octopus legs.

4. The seating sensor according to any one of claims 1 to 3,
wherein the film (8, 9, 10) includes a lower-side film (8), an upper-side film (9), and a spacer film (10), the spacer film (10) is electrically insulative and is interposed between the lower-side film (8) and the upper-side film (9),
each film switch (17-20) includes a first lower-side contact (21) and a second lower-side contact (21) that are formed on the lower-side film (8),
each film switch (17-20) includes a first upper-side contact (22) and a second upper-side contact (22) that are formed an the upper-side film (9),
each first lower-side contact (21) faces each first upper-side contacts (22), and each second lower-side contact (21) faces each second upper-side contacts (22),
the pair of conductive wires (15, 16) includes a plus conductive wire (15) and a minus conductive wire (16) that are formed on the lower-side film (8),
the plus conductive wire (15) is connected with each first lower-side contact (21), and the minus conductive wire (16) is connected with each second lower-side contacts (21),
the upper-side film (9) includes a conductive wire (23) that connects the first upper-side contact (22) with the second upper-side contact (22), the spacer film (10) defines an opening,
each first lower-side contact (21) is capable of making contact with each first upper-side contact (22) through the opening of the spacer film (10),
each second lower-side contacts (21) is capable of making contact with each second upper-side contact (22) through the opening of the spacer film (10),
the first lower-side contacts (22) branch from the plus conductive wire (15) in a shape of octopus legs, and
the second lower-side contacts (22) branch from the minus conductive wire (16) in a shape of octopus legs.

5. The seating sensor according to any one of claims 1 to 3, wherein the film (8, 9, 10) includes:
a lower-side film (8) on which a plus conductive wire (15) and a minus conductive wire (16) are formed as the pair of conductive wires (15, 16), the plus conductive wire (15) having first lower-side contacts (21a) of the plurality of film switches (17-20), the minus conductive wire (16) having second lower-side contacts (21b) of the plurality of film switches (17-20);
an upper-side film (9) on which upper-side contacts (24) of the plurality of film switches (17-20) are formed, each upper-side contact (24) facing each first lower-side contact (21a) of the plus conductive wire (15) and each second lower-side contact (21b) of the minus conductive wire (16), the plus conductive wire (15) and the minus conductive wire (16) being adjacent to each other; and
a spacer film (10) that is electrically insulative, the spacer film (10) being interposed between the lower-side film (8) and the upper-side film (9), the spacer film (10) defining an opening through which each first lower-side contact (21a) and each second lower-side contact (21b) are capable of making contact with each upper-side contacts (24),
wherein the first lower-side contacts (21a) branch from the plus conductive wire in a shape of octopus legs, and the second lower-side contacts (21b) branch from the minus conductive wire (16) in a shape of octopus legs.

6. The seating sensor according to any one of claims 1 to 3, wherein the film (8, 9, 10) includes a lower-side film (8), an upper-side film (9), and a spacer film (10),
the spacer film (10) is electrically insulative and is interposed between the lower-side film (8) and the upper-side film (9),
each film switch (17-20) includes a first lower-side contact (21a) and a second lower-side contact (21b) that are formed on the lower-side film (8) to be adjacent to each other,
each film switch (17-20) includes an upper-side contact (24) that is formed on the upper-side film (9), the upper-side contact (24) faces both the first lower-side contact (21a) and the second lower-side contact (21b) that are adjacent to each other, the pair of conductive wires (15, 16) includes a plus conductive wire (15) and a minus conductive wire (16) that are formed on the lower-side film (8), the plus conductive wire (15) is connected with each first lower-side contact (21a), and the minus conductive wire (16) is connected with each second lower-side contacts (21b),
the spacer film (10) defines an opening, both the first lower-side contact (21a) and the second lower-side contact (21b) are capable of making contact with the upper-side contact (24) through the opening of the spacer film (10), the first lower-side contacts (21a) branch from the plus conductive wire (15) in a shape of octopus legs, and
the second lower-side contacts (21b) branch from the minus conductive wire (16) in a shape of octopus legs.

7. A seating sensor according to claim 1 **characterized by** comprising:
a current-limiting resistor element (R1) that limits current, the resistor element being located on a side of the base end portion of the pair of conductive wires (15, 16) with respect to the plurality of film switches (17-20), the current-limiting resistor element (R1) being arranged on the film (8), the current-limiting resistor element (R1) being connected in series with at least one of the pair of conductive wires (15, 16).

8. The seating sensor according to claim 7, wherein the current limiting resistor element (R1) is manufactured in a printing process identical with a printing process in which the break-detecting resistor element (R2) is manufactured.

9. The seating sensor according to claim 7, wherein the current limiting resistor element (R1) is connected with at least one of the pair of conductive wires (15, 16) on a side of the base end portion of the pair of conductive wires (15, 16) with respect to the break-detecting resistor element (R2).

10. A seating sensor according to claim 1, wherein the the film (8, 9, 10) includes:
an upper-side film (9) on which a first upper-side contact (22) of the plurality of film switches (17-20), a second upper-side contact (22) of the plurality of film switches (17-20), and a conductive wire (23) are formed,
wherein the first upper-side contact (22) faces the first lower-side contact (21) of the plus conductive wire (15),
wherein the second upper-side contact (22) faces the second lower-side contacts (21) of the minus conductive wire (16),
wherein the conductive wire (23) connects the first upperside contact (22) with the second upper-side contact (22).

11. A seating sensor according to claim 1, wherein each upper-side contact (24) facing each first lower-side contact (21a) of the plus conductive wire (15) and each second lower-side contact (21b) of the minus conductive wire (16), the plus conductive wire (15) and the minus conductive wire (16) being adjacent to each other.

12. The seating sensor according to claim 6, wherein the film (8, 9, 10) includes an octopus leg-shaped portion (2) and a straight belt-shaped portion (3), the octopus leg-shaped portion (2) includes film switches (17-20) formed therein,
the straight belt-shaped portion (3) is arranged between the octopus leg-shaped portion (2) and the connector (300), each of the pair of conductive wires (15, 16) is formed in the octopus leg-shaped portion (2), and
the pair of conductive wires (15, 16) is line symmetrical with respect to the straight belt-shaped portion (3) as a central line thereof.

## Patentansprüche

1. Besetzungssensor, **dadurch gekennzeichnet, dass** er folgende Merkmale aufweist:
eine Folie (8, 9, 10), die elektrisch isolierend ist;
ein Paar von Leiterdrähten (15, 16), die einen geringen Widerstand aufweisen, wobei das Leiterdrähtepaar (15, 16) auf der Folie (8) ausgebildet ist, das Leiterdrähtepaar (15, 16) untere Endabschnitte aufweist, die mit einem Verbinder (300) verbunden sind;
eine Vielzahl von Folienschaltern (17 - 20), die eine Besetzung erfassen, wobei die Vielzahl von Folienschaltern (17 - 20) in dem Leiterdrähtepaar (15, 16) ausgebildet ist, um das Leiterdrähtepaar (15, 16) ansprechend auf eine Besetzung kurz zu schließen; und
ein Unterbrechungserfassungs-Resistorelement (R2), das einen vorgegebenen elektrischen Widerstand aufweist, wobei das Unterbrechungserfassungs-Reistorelement (R2) Enden aufweist, die einzeln mit dem Leiterdrähtepaar (15, 16) verbunden sind,
wobei das Unterbrechungserfassungs-Resistorelement (R2) zwischen den unteren Endabschnitten des Leiterdrähtepaars (15, 16) und der Vielzahl von Folienschaltern (17 - 20) angeordnet ist;
**dadurch gekennzeichnet, dass**
das Unterbrechungserfassungs-Resistorelement (R2) auf dem Film (8) ausgebildet ist;
ein auf einer besetzten Oberfläche angeordneter Abschnitt bereitgestellt ist, der die Vielzahl von Folienschaltern (17 - 20) beinhaltet, wobei der auf einer besetzten Oberfläche angeordnete Abschnitt auf einer besetzten Oberfläche eines Sitzplatzes (4) angeordnet ist; und
ein äußerer, auf einer besetzten Oberfläche angeordneter Abschnitt bereitgestellt ist, der das Unterbrechungserfassungs-Resistorelement (R2) beinhaltet, wobei der äußere, auf einer besetzten Oberfläche angeordnete Abschnitt in einer Position angeordnet ist, die, anders als die besetzte Oberfläche, an den auf einer besetzten Oberfläche angeordneten Abschnitt grenzt,
wobei das Unterbrechungserfassungs-Resistorelement (R2) in dem äußeren, auf einer besetzten Oberfläche angeordneten Abschnitt angeordnet ist.

2. Besetzungssensor nach Anspruch 1, wobei das Unterbrechungserfassungs-Resistorelement (R2) in einem im Wesentlichen mittleren Abschnitt zwischen einem Endabschnitt der Folie (8), der sich auf der Seite der Vielzahl von Folienschaltern (17 - 20) befindet, und den unteren Endabschnitten des Leiterdrähtepaars (15, 16) angeordnet ist.

3. Besetzungssensor nach Anspruch 1 oder 2, wobei die Folie (8, 9, 10) folgende Merkmale aufweist: eine unterseitige Folie (8), an der ein Plus-Leiterdraht (15) und ein Minus-Leiterdraht (16) als das Leiterdrähtepaar (15, 16) ausgebildet sind, wobei der Plus-Leiterdraht (15) einen ersten unterseitigen Kontakt (21) der Vielzahl von Folienschaltern (17 - 20) aufweist, der Minus-Leiterdraht (16) einen zweiten unterseitigen Kontakt (21) der Vielzahl von Folienschaltern (17 - 20 aufweist;
eine oberseitige Folie (9), an der ein erster oberseitiger Kontakt (22) der Vielzahl von Folienschaltern (17 - 20), ein zweiter oberseitiger Kontakt (22) der Vielzahl von Folienschaltern (17 - 20) und ein Leiterdraht (23) ausgebildet sind,
wobei der erste oberseitige Kontakt (22) auf den ersten unterseitigen Kontakt (21) des Plus-Leiterdrahts (15) gerichtet ist,
wobei der zweite oberseitige Kontakt (22) auf den zweiten unterseitigen Kontakt (21) des Minus-Leiterdrahts (16) gerichtet ist,
wobei der Leiterdraht (23) den ersten oberseitigen Kontakt (22) mit dem zweiten oberseitigen Kontakt (22) verbindet; und
eine Abstandhalterfolie (10), die elektrisch isolierend ist, wobei die Abstandhalterfolie (10) zwischen der unterseitigen Folie (8) und der oberseitigen Folie (9) angeordnet ist, die Abstandhalterfolie (10) eine Öffnung definiert,
wobei der erste unterseitige Kontakt (21) in der Lage ist, durch die Öffnung der Abstandhalterfolie (10) hindurch einen Kontakt mit dem ersten oberseitigen Kontakt (22) herzustellen, und der zweite unterseitige Kontakt (21) in der Lage ist, durch die Öffnung der Abstandhalterfolie (10) hindurch einen Kontakt mit dem zweiten oberseitigen Kontakt (22) herzustellen,
wobei der erste unterseitige Kontakt (21) wie Krakenarme von dem Plus-Leiterdraht (15) abzweigt und der zweite unterseitige Kontakt wie Krakenarme von dem Minus-Leiterdraht (16) abzweigt.

4. Besetzungssensor nach einem der Ansprüche 1 bis 3,
wobei die Folie (8, 9, 10) eine unterseitige Folie (8), eine oberseitige Folie (9) und eine Abstandhalterfolie (10) beinhaltet, wobei die Abstandhalterfolie (10) elektrisch isolierend ist und zwischen der unterseitigen Folie (8) und der oberseitigen Folie (9) angeordnet ist,
wobei jeder Folienschalter (17 - 20) einen ersten unterseitigen Kontakt (21) und einen zweiten unterseitigen Kontakt (21), die an der unterseitigen Folie (8) ausgebildet sind, beinhaltet,
wobei jeder Filmschalter (17 - 20) einen ersten oberseitigen Kontakt (22) und einen zweiten oberseitigen Kontakt (22), die an der oberseitigen Folie (9) ausgebildet sind, beinhaltet,
jeweils ein erster unterseitiger Kontakt (21) auf jeweils einen ersten oberseitigen Kontakt (22) gerichtet ist, und jeweils ein zweiter unterseitiger Kontakt (21) auf jeweils einen zweiten oberseitigen Kontakt (22) gerichtet ist,
wobei das Leiterdrähtepaar (15, 16) einen Plus-Leiterdraht (15) und einen Minus-Leiterdraht (16) beinhaltet, die an der unterseitigen Folie (8) ausgebildet sind,
wobei der Plus-Leiterdraht (15) mit jedem ersten unterseitigen Kontakt (21) verbunden ist, und der Minus-Leiterdraht (16) mit jedem zweiten unterseitigen Kontakt (21) verbunden ist,
wobei die oberseitige Folie (9) einen Leiterdraht (23) beinhaltet, der den ersten oberseitigen Kontakt (22) mit dem zweiten oberseitigen Kontakt (22) verbindet,
wobei die Abstandhalterfolie (10) eine Öffnung definiert,
wobei jeweils ein erster unterseitiger Kontakt (21) in der Lage ist, durch die Öffnung der Abstandhalterfolie (10) hindurch einen Kontakt mit jeweils einem ersten oberseitigen Kontakt (22) herzustellen,
wobei jeweils ein zweiter unterseitiger Kontakt (21) in der Lage ist, durch die Öffnung der Abstandhalterfolie (10) hindurch einen Kontakt mit jeweils einem zweiten oberseitigen Kontakt (22) herzustellen,
wobei die ersten unterseitigen Kontakte (22) wie Krakenarme vom Plus-Leitungsdraht (15) abzweigen, und
wobei die zweiten unterseitigen Kontakte (22) wie Krakenarme vom Minus-Leiterdraht (16) abzweigen.

5. Besetzungssensor nach einem der Ansprüche 1 bis 3, wobei die Folie (8, 9, 10) folgende Merkmale aufweist:
eine unterseitige Folie (8), an der ein Plus-Leiterdraht (15) und ein Minus-Leiterdraht (16) als das Leiterdrähtepaar (15, 16) ausgebildet sind, der Plus-Leiterdraht (15) erste unterseitige Kontakte (21a) der Vielzahl von Folienschaltern (17 - 20) aufweist, der Minus-Leiterdraht (16) zweite unterseitige Kontakte (21b) der Vielzahl von Folienschaltern (17 - 20) aufweist;
eine oberseitige Folie (9), an der oberseitige Kontakte (24) der Vielzahl von Folienschaltern (17 - 20) ausgebildet sind, wobei jeder oberseitige Kontakt (24) jeweils auf jeweils einen ersten unterseitigen Kontakt (21a) des Plus-Leiterdrahts (15) und auf jeweils einen zweiten unterseitigen Kontakt (21b) des Minus-Leiterdrahts (16) gerichtet ist, wobei der Plus-Leiterdraht (15) und der Minus-Leiterdraht (16) aneinander grenzen; und
eine Abstandhalterfolie (10), die elektrisch isolierend ist, wobei die Abstandhalterfolie (10) zwischen der unterseitigen Folie (8) und der oberseitigen Folie (9) angeordnet ist, die Abstandhalterfolie (10) eine Öffnung definiert, durch die hindurch jeweils ein erster unterseitiger Kontakt (21a) und jeweils ein zweiter unterseitiger Kontakt (21b) in der Lage sind, mit jeweils einem oberseitigen Kontakt (24) Kontakt herzustellen,
wobei die ersten unterseitigen Kontakte (21a) wie Krakenarme von dem Plus-Leiterdraht (15) abzweigen und die zweiten unterseitigen Kontakte (21b) wie Krakenarme von dem Minus-Leiterdraht (16) abzweigen.

6. Besetzungssensor nach einem der Ansprüche 1 bis 3, wobei die Folie (8, 9, 10) eine unterseitige Folie (8), eine oberseitige Folie (9) und eine Abstandhalterfolie (10) aufweist,
wobei die Abstandhalterfolie (10) elektrisch isolierend ist und zwischen der unterseitigen Folie (8) und der oberseitigen Folie (9) angeordnet ist,
wobei jeder Folienschalter (17-20) einen ersten unterseitigen Kontakt (21a) und einen zweiten unterseitigen Kontakt (21b) beinhaltet, die an der unterseitigen Folie (8) so ausgebildet sind, so dass sie aneinander grenzen,
wobei jeder Folienschalter (17 - 20) einen oberseitigen Kontakt (24) beinhaltet, der an der oberseitigen Folie (9) ausgebildet ist, wobei der oberseitige Kontakt (24) sowohl auf den ersten unterseitigen Kontakt (21a) als auch den zweiten unterseitigen Kontakt (21b), die aneinander angrenzen, gerichtet ist, wobei das Leiterdrähtepaar (15, 16) einen Plus-Leiterdraht (15) und einen Minus-Leiterdraht (16) beinhaltet, die an der unterseitigen Folie (8) ausgebildet sind, wobei der Plus-Leiterdraht (15) mit jedem ersten unterseitigen Kontakt (21a) verbunden ist und der Minus-Leiterdraht (16) mit jedem zweiten unterseitigen Kontakt (21b) verbunden ist,
wobei die Abstandhalterfolie (10) eine Öffnung definiert, wobei sowohl der erste unterseitige Kontakt (21a) als auch der zweite unterseitige Kontakt (21b) in der Lage sind, durch die Öffnung der Abstandhalterfolie (10) hindurch einen Kontakt mit dem oberseitigen Kontakt (24) herzustellen, wobei die ersten unterseitigen Kontakte (21a) wie Krakenarme vom Plus-Leiterdraht (15) abzweigen, und
wobei die zweiten unterseitigen Kontakte (21b) wie Krakenarme vom Minus-Leiterdraht (16) abzweigen.

7. Besetzungssensor nach Anspruch 1, **dadurch gekennzeichnet, dass** er folgende Merkmale aufweist:
ein strombegrenzendes Resistorelement (R1), das einen Strom begrenzt, wobei das Resistorelement auf einer Seite des unteren Endabschnitts des Leiterdrähtepaars (15, 16) in Bezug auf die Vielzahl von Folienschaltern (17 - 20) angeordnet ist, wobei das strombegrenzende Resistorelement (R1) auf der Folie (8) angeordnet ist, wobei das strombegrenzende Resistorelement (R1) mit zumindest einem des Leiterdrähtepaars (15, 16) in Reihe geschaltet ist.

8. Besetzungssensor nach Anspruch 7, wobei das strombegrenzende Resistorelement (R1) in einem Druckverfahren hergestellt wird, das mit einem Druckverfahren, in dem das Unterbrechungserfassungs-Resistorelement (R2) hergestellt wird, identisch ist.

9. Besetzungssensor nach Anspruch 7, wobei das strombegrenzende Resistorelement (R1) in Bezug auf das Unterbrechungserfassungs-Resistorelement (R2) auf einer Seite des unteren Endabschnitts des Paars von Leiterdrähten (15, 16) mit zumindest einem des Leiterdrähtepaars (15, 16) verbunden ist.

10. Besetzungssensor nach Anspruch 1, wobei die Folie (8, 9, 10) folgende Merkmale aufweist:
eine oberseitige Folie (9), an der ein erster oberseitiger Kontakt (22) der Vielzahl von Folienschalter (17 - 20), ein zweiter oberseitiger Kontakt (22) der Vielzahl von Folienschaltern (17 - 20) und ein Leiterdraht (23) ausgebildet sind,
wobei der erste oberseitige Kontakt (22) auf den ersten unterseitigen Kontakt (21) des Plus-Leiterdrahts (15) gerichtet ist,
wobei der zweite oberseitige Kontakt (22) auf die zweiten unterseitigen Kontakte (21) des Minus-Leiterdrahts (16) gerichtet ist,
wobei der Leiterdraht (23) den ersten oberseitigen Kontakt (22) mit dem zweiten oberseitigen Kontakt (22) verbindet.

11. Besetzungssensor nach Anspruch 1, wobei jeder oberseitige Kontakt (24) auf jeden ersten unterseitigen Kontakt (21a) des Plus-Leiterdrahts (15) und jeden zweiten unterseitigen Kontakt (21b) des Minus-Leiterdrahts (16) gerichtet ist, wobei der Plus-Leiterdraht (15) und der Minus-Leiterdraht (16) aneinander grenzen.

12. Besetzungssensor nach Anspruch 6, wobei die Folie (8, 9, 10) einen wie Krakenarme geformten Abschnitt (2) und einen geraden, bandförmigen Abschnitt (3) beinhaltet, wobei der wie Krakenarme geformte Abschnitt (2) Folienschalter (17 - 20) beinhaltet, die in ihm ausgebildet sind,
der gerade, bandförmige Abschnitt (3) zwischen dem wie Krakenarme geformten Abschnitt (2) und dem Verbinder (300) angeordnet ist, wobei jeder der beiden Leiterdrähte (15, 16) in dem wie Krakenarme geformten Abschnitt (2) ausgebildet ist, und
das Paar von Leiterdrähten (15, 16) in Bezug auf den geraden, bandförmigen Abschnitt (3), der ihnen als Mittellinie dient, liniensymmetrisch ist.

## Revendications

1. Capteur de présence pour siège **caractérisé par** le fait de comprendre:
un film (8, 9, 10) qui est électriquement isolant ;
une paire de fils conducteurs (15, 16) qui ont une basse résistance, la paire de fils conducteurs (15, 16) formée sur le film (8), la paire de fils conducteurs (15, 16) ayant des portions d'extrémité de base qui sont connectées avec un connecteur (300) ;
une pluralité de commutateurs en film (17-20) qui détectent une assise, la pluralité de commutateurs en film (17, 20) étant formée dans la paire de fils conducteurs (15, 16) pour mettre en court circuit la paire de fils conducteurs (15, 16) en réponse à une assise ; et
un élément de résistance à détection de coupure (R2) qui a une résistance électrique prédéterminée, l'élément de résistance à détection de coupure (R2) ayant des extrémités qui sont individuellement connectées avec la paire de fils conducteurs (15, 16),
dans lequel l'élément de résistance à détection de coupure (R2) est situé entre les portions d'extrémité de base de la paire de fils conducteurs (15, 16) et la pluralité de commutateurs en film (17-20) ;
**caractérisé en ce que**
l'élément de résistance à détection de coupure (R2) est formé sur le film (8) ;
une portion agencée dans une surface de siège est fournie qui inclut la pluralité de commutateurs en films (17-20), la portion agencée dans une surface de siège agencée dans une surface de siège d'un espace d'assise (4) ; et
une portion agencée dans une surface de siège extérieure est fournie qui inclut l'élément de résistance à détection de coupure (R2), la portion agencée dans une surface de siège extérieure étant agencée dans un emplacement, qui est autre que la surface de siège, adjacente à la portion agencée dans une surface de siège,
dans lequel l'élément de résistance à détection de coupure (R2) est agencé dans la portion agencée dans une surface de siège extérieure.

2. Capteur de présence pour siège selon la revendication 1, dans lequel l'élément de résistance à détection de coupure (R2) est agencé au niveau d'une portion substantiellement centrale entre une portion d'extrémité du film (8), qui est sur un côté de la pluralité de commutateurs en film (17-20), et les portions d'extrémité de base de la paire de fils conducteurs (15,16).

3. Capteur de présence pour siège selon la revendication 1 ou 2, dans lequel le film (8, 9 10) inclut :
un film côté inférieur (8) sur lequel un fil conducteur plus (15) et un fil conducteur moins (16) sont formés comme étant la paire de fils conducteurs (15, 16), le fil conducteur plus (15) ayant un premier contact côté inférieur (21) de la pluralité de commutateurs en film (17-20), le fil conducteur moins (16) ayant un deuxième contact côté inférieur (21) de la pluralité de commutateurs en film (17, 20),
un film côté supérieur (9) sur lequel un premier contact côté supérieur (22) de la pluralité de commutateurs en film (17-20), un deuxième contact côté supérieur (22) de la pluralité de commutateurs en film (17-20), et un fil conducteur (23) sont formés,
dans lequel le premier contact côté supérieur (22) fait face au premier contact côté inférieur (21) du fil conducteur plus (15),
dans lequel le deuxième contact côté supérieur (22) fait face au deuxième contact côté inférieur (21) du fil conducteur moins (16),
dans lequel le fil conducteur (23) connecte le premier contact côté supérieur (22) avec le deuxième contact côté supérieur (22) ; et
un film d'espacement (10) qui est électriquement isolant, le film d'espacement (10) étant interposé entre le film côté inférieur (8) et le film côté supérieur (9), le film d'espacement (10) définissant une ouverture,
dans lequel le premier contact côté inférieur (21) est capable d'établir un contact avec le premier contact côté supérieur (22) à travers l'ouverture du film d'espacement (10), et le deuxième contact côté inférieur (21) est capable d'établir un contact avec le deuxième contact côté supérieur (22) à travers l'ouverture du film d'espacement (10),
dans lequel le premier contact côté inférieur (21) se ramifie depuis le fil conducteur plus (15) en une forme de pattes de pieuvre, et le deuxième contact côté inférieur (21) se ramifie depuis le fil conducteur moins (16) en une forme de pattes de pieuvre.

4. Capteur de présence pour siège selon l'une quelconque des revendications 1 à 3,
dans lequel le film (8, 9, 10) inclut un film côté inférieur (8), un film côté supérieur (9), et un film d'espacement (10), le film d'espacement (10) est électriquement isolant et interposé entre le film côté inférieur (8) et le film côté supérieur (9),
chaque commutateur en film (17-20) inclut un premier contact côté inférieur (21) et un deuxième contact côté inférieur (21) qui sont formés sur le film côté inférieur (8),
chaque commutateur en film (17-20) inclut un premier contact côté supérieur (22) et un deuxième contact côté supérieur (22) qui sont formés sur le film côté supérieur (9),
chaque premier contact côté inférieur (21) fait face à chacun des premiers contacts côté supérieur (22), et chaque deuxième contact côté inférieur (21) fait face à chacun des deuxièmes contacts côté supérieur (22),
la paire de fils conducteurs (15, 16) inclut un fil conducteur plus (15) et un fil conducteur moins (16) qui sont formés sur le film côté inférieur (8),
le fil conducteur plus (15) est connecté avec chaque premier contact côté inférieur (21), et le fil conducteur moins (16) est connecté avec chacun des deuxièmes contacts côté inférieur (21),
le film côté supérieur (9) inclut un fil conducteur (23) qui connecte le premier contact côté supérieur (22) au deuxième contact côté supérieur (22), le film d'espacement (10) définit une ouverture,
chaque premier contact côté inférieur (21) est capable d'établir un contact avec chaque premier contact côté supérieur (22) à travers l'ouverture du film d'espacement (10),
chacun des deuxièmes contacts côté inférieur (21) est capable d'établir un contact avec chaque deuxième contact côté supérieur (22) à travers l'ouverture du film d'espacement (10),
les premiers contacts côté inférieur (22) se ramifient depuis le fil conducteur plus (15) en une forme de pattes de pieuvre, et
les deuxièmes contacts côté inférieur (22) se ramifient depuis le fil conducteur moins (16) en une forme de pattes de pieuvre.

5. Capteur de présence pour siège selon l'une quelconque des revendications 1 à 3, dans lequel le film (8, 9, 10) inclut :
un film côté inférieur (8) sur lequel un fil conducteur plus (15) et un fil conducteur moins (16) sont formés comme étant la paire de fils conducteurs (15, 16), le fil conducteur plus (15) ayant des premiers contacts côté inférieur (21a) de la pluralité de commutateurs en film (17-20), le fil conducteur moins (16) ayant des deuxièmes contacts côté inférieur (21b) de la pluralité de commutateurs en film (17-20) ;
un film côté supérieur (9) sur lequel des contacts côté supérieur (24) de la pluralité de commutateurs en film (17-20) sont formés, chaque contact côté supérieur (24) faisant face à chaque premier contact côté inférieur (21a) du fil conducteur plus (15) et à chaque deuxième contact côté inférieur (21b) du fil conducteur moins (16), le fil conducteur plus (15) et le fil conducteur moins (16) étant adjacents l'un à l'autre ; et
un film d'espacement (10) qui est électriquement isolant, le film d'espacement (10) étant interposé entre le film côté inférieur (8) et le film côté supérieur (9), le film d'espacement (10) définissant une ouverture à travers laquelle chaque premier contact côté inférieur (21a) et chaque deuxième contact côté inférieur (21b) sont capables d'établir un contact avec chacun des contacts côté supérieur (24),
dans lequel les premiers contacts côté inférieur (21a) se ramifient depuis le fil conducteur plus en une forme de pattes de pieuvre, et les deuxièmes contacts côté inférieur (21b) se ramifient depuis le fil conducteur moins (16) en une forme de pattes de pieuvre.

6. Capteur de présence pour siège selon l'une quelconque des revendication 1 à 3, dans lequel le film (8, 9, 10) inclut un film côté inférieur (8), un film côté supérieur (9), et un film d'espacement (10), le film d'espacement (10) est électriquement isolant et est interposé entre le film côté inférieur (8) et le film côté supérieur (9),
chaque commutateur en film (17-20) inclut un premier contact côté inférieur (21a) et un deuxième contact côté inférieur (21b) qui sont formés sur le film côté inférieur (8) pour être adjacents l'un à l'autre,
chaque commutateur en film (17-20) inclut un contact côté supérieur (24) qui est formé sur le film côté supérieur (9), le contact côté supérieur (24) fait face au premier contact côté inférieur (21a) et au deuxième contact côté inférieur (21b) à la fois qui sont adjacents l'un à l'autre, la paire de fils conducteurs (15, 16) inclut un fil conducteur plus (15) et un fil conducteur moins (16) qui sont formés sur le film côté inférieur (8), le fil conducteur plus (15) est connecté avec chaque premier contact côté inférieur (21a), et le fil conducteur moins (16) est connecté avec chacun des deuxièmes contacts côté inférieur (21b),
le film d'espacement (10) définit une ouverture, le premier contact côté inférieur (21a) et le deuxième contact côté inférieur (21b) sont tous deux capables d'établir un contact avec le contact côté supérieur (24) à travers l'ouverture du film d'espacement (10), les premiers contacts côté inférieur (21a) se ramifient depuis le fil conducteur plus (15) en une forme de pattes de pieuvre, et
les deuxièmes contacts côté inférieur (21b) se ramifient depuis le fil conducteur moins (16) en une forme de pattes de pieuvre,

7. Capteur de présence pour siège selon la revendication 1 **caractérisé par** le fait de comprendre:
un élément de résistance limitant un courrant électrique (R1) qui limite un courrant électrique, l'élément de résistance étant situé sur un côté de la portion d'extrémité de base de la paire de fils conducteurs (15,16) par rapport à la pluralité de commutateurs en film (17-20), l'élément de résistance limitant un courant électrique (R1) étant agencé sur le film (8), l'élément de résistance limitant un courant électrique (R1) étant connecté en série avec au moins l'un de la paire de fils conducteurs (15,16).

8. Capteur de présence pour siège selon la revendication 7, dans lequel l'élément de résistance limitant un courrant électrique (R1) est fabriqué dans un processus d'impression identique à un processus d'impression dans lequel l'élément de résistance à détection de coupure (R2) est fabriqué.

9. Capteur de présence pour siège selon la revendication 7, dans lequel l'élément de résistance limitant un courant électrique (R1) est connecté avec au moins l'un de la paire de fils conducteurs (15, 16) sur un côté de la portion d'extrémité de base de la paire de fils conducteurs (15, 16) par rapport à l'élément de résistance à détection de coupure (R2).

10. Capteur de présence pour siège selon la revendication 1, dans lequel le film (8, 9, 10) inclut :
un film côté supérieur (9) sur lequel un premier contact côté supérieur (22) de la pluralité de commutateurs en film (17-20), un deuxième contact côté supérieur (22) de la pluralité de commutateurs en film (17-20), et un fil conducteur (23) sont formés,
dans lequel le premier contact côté supérieur (22) fait face au premier contact côté inférieur (21) du fil conducteur plus (15),
dans lequel le deuxième contact côté supérieur (22) fait face aux deuxièmes contacts côté inférieur (21) du fil conducteur moins (16),
dans lequel le fil conducteur (23) connecte le premier contact côté supérieur (22) avec le deuxième contact côté supérieur (22).

11. Capteur de présence pour siège selon la revendication 1, dans lequel chaque contact côté supérieur (24) faisant face à chaque premier contact côté inférieur (21a) du fil conducteur plus (15) et à chaque deuxième contact côté inférieur (21b) du fil conducteur moins (16), le fil conducteur plus (15) et le fil conducteur moins (16) étant adjacents l'un à l'autre.

12. Capteur de présence pour siège selon le revendication 6, dans lequel le film (8, 9, 10) inclut une portion en forme de pattes de pieuvre (2) et une portion droite en forme de ceinture (3), la portion en forme de pattes de pieuvre (2) inclut des commutateurs en film (17-20) qui y sont formés,
la portion droite en forme de ceinture (3) est agencé entre la portion en forme de pattes de pieuvre (2) et le connecteur (300), chacun de la paire de fils conducteurs (15,16) est formé dans la portion en forme de pattes de pieuvre (2), et
la paire de fils conducteurs (15, 16) est symétrique en ligne par rapport à la portion droite en forme de ceinture (3) comme une ligne centrale correspondante.
